# FASCICULE DE BREVET EUROPEEN

(11) **EP 1 807 897 B1**
(45) Date de publication et mention de la délivrance du brevet: **04.06.2008**
(21) Numéro de dépôt: 05815936.9
(22) Date de dépôt: 27.10.2005
(51) Int. Cl.: H01M 8/04

(54) **MODULE DE PILE A COMBUSTIBLE, SON PROCEDE DE FABRICATION ET UNITE CONTENANT PLUSIEURS DE CEUX-CI**
BRENNSTOFFZELLENMODUL, VERFAHREN ZU DESSEN HERSTELLUNG UND EINHEIT MIT MEHREREN DIESER MODULE
FUEL CELL MODULE, METHOD FOR THE PRODUCTION THEREOF AND A UNIT COMPRISES A NUMBER THEREOF

(30) Priorité: 02.11.2004 FR 0452495
(43) Date de publication de la demande: 18.07.2007
(73) Titulaire: COMMISSARIAT A L'ENERGIE ATOMIQUE, 75015 Paris (FR)
(72) Inventeur: GALLET, Damien, F-84000 AVIGNON (FR); BLEIN, Franck, F-37550 SAINT-AVERTIN (FR); SARRO, Jean-Luc, F-07700 BOURG SAINT ANDEOL (FR)
(74) Mandataire: Poulin, Gérard
(86) Numéro de dépôt international: PCT/FR2005/050911
(87) Numéro de publication internationale: WO 2006/048574

(56) Documents cités:
- WO-A-20/04093235
- PATENT ABSTRACTS OF JAPAN vol. 014, no. 089 (E-0891), 19 février 1990 (1990-02-19) -& JP 01 298647 A (MITSUBISHI HEAVY IND LTD; others: 01), 1 décembre 1989 (1989-12-01)
- PATENT ABSTRACTS OF JAPAN vol. 014, no. 032 (E-876), 22 janvier 1990 (1990-01-22) -& JP 01 267964 A (MITSUI ENG & SHIPBUILD CO LTD; others: 01), 25 octobre 1989 (1989-10-25)
- PATENT ABSTRACTS OF JAPAN vol. 014, no. 471 (E-0990), 15 octobre 1990 (1990-10-15) -& JP 02 192665 A (FUJIKURA LTD), 30 juillet 1990 (1990-07-30)

## Description

### Domaine de l'invention

L'invention concerne les piles à combustible et, en particulier, celles fonctionnant à haute température et étant du type SOFC (Solid Oxide Fuel Cell), mais peut également s'appliquer à d'autres familles de piles à combustible.

Elle concerne également la fabrication de telles piles et leur assemblage pour constituer une unité de plusieurs de ces piles.

### Art antérieur et problème posé

Les piles du type SOFC fonctionnent avec de l'oxygène en guise de comburant et de l'hydrogène en guise de combustible, ou avec un autre gaz combustible, par exemple du type du méthane, et à une température comprise entre 500 et 1 000°C. Ces piles sont constituées d'un empilement de plusieurs cellules élémentaires reliées par des éléments de connexion, tels que des interconnecteurs ou des plaques bipolaires. Les cellules élémentaires sont constituées d'un empilement d'une cathode, un électrolyte et d'une anode. La température élevée est nécessaire pour obtenir une conductivité suffisante de l'électrolyte en ions O².

Plusieurs types d'architecture régissent la conception de ces piles à combustible ; on en compte quatre principaux qui sont les suivants :
- architecture tubulaire ;
- architecture monolithique ;
- architecture en bande ;
- architecture plane.

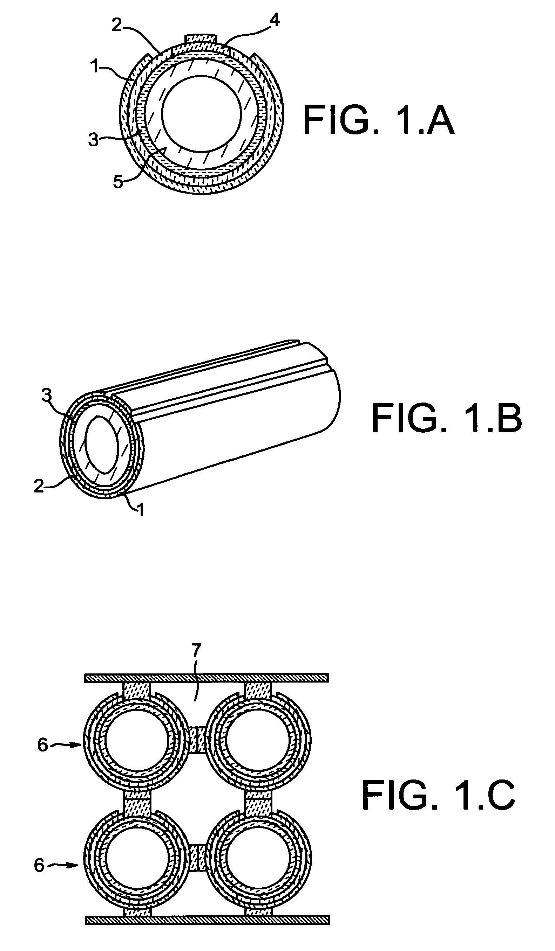

En référence aux figures 1A, 1B et 1C, l'architecture tubulaire est largement connue. Elle se présente sous la forme d'un tube fermé ou non à une extrémité (voir figure 1B). Comme le montre la figure 1C, plusieurs cellules 6 sont placées à l'intérieur d'une chambre 7 et sont connectées en série et/ou en parallèle. En revenant à la figure 1A, l'oxygène est injecté au moyen d'un tube interne non représenté au fond de chaque cellule et progresse le long d'une cathode 3 en traversant un tube support 5 sur lequel elle est placée. Le combustible est injecté à l'extérieur de la cellule, dans la chambre principale 7 (voir figure 1C) et est donc en contact avec une anode 1 se trouvant sur la surface externe d'un électrolyte 2, lui-même de forme tubulaire puisque placé sur la cathode 3. Cette dernière est reliée à un connecteur 4 débouchant sur la surface extérieure de l'électrolyte 2. Les gaz résiduels sortent et sont éventuellement mélangés dans une chambre de combustion qui permet le préchauffage de l'oxygène entrant.

Dans une telle configuration, aucune étanchéité n'est à gérer. La tenue mécanique de la cellule est assurée par le tube support 5 qui est poreux pour que le premier combustible puisse le traverser et être diffusé vers la cathode 3. Il a été envisagé ensuite de supprimer ce tube support 5 et que la cathode 3 assure la tenue mécanique de l'ensemble.

Une fois connectée entre elles en séries, les cellules permettent d'obtenir un voltage souhaité entre des plaques collectrices de courant. La connexion des cellules 6 sur la figure 1C est en parallèle et permet d'obtenir la puissance désirée.

Plusieurs inconvénients sont relatifs à cette structure tubulaire et sont les suivants :
- les lignes de courant sont longues, car le courant doit parcourir circonférentiellement (voir figure 1C) les demi-tubes ; les pertes ohmiques sont donc élevées ;
- la fabrication des tubes est complexe et coûteuse ;
- les performances volumiques sont faibles, compte tenu de l'espace perdu entre les cellules ; et
- le gradient thermique sur la longueur des tubes, dû à l'épuisement des gaz réactifs, est fortement préjudiciable à la tenue mécanique de ces derniers.

Plusieurs techniques permettent d'améliorer la tenue mécanique de cette structure tubulaire et sont les suivantes :
- réduction de la taille des tubes pour réduire les contraintes ;
- réduction du gradient thermique par l'injection des gaz à différents niveaux ; et
- renforcement du tube support.

D'autre part, la réduction de la longueur des lignes de courant peut être obtenue également par :
- la réduction de la résistance interne de la pile, ce qui implique une puissance plus élevée ;
- la réduction des pertes par polarisation dans les électrodes par l'amincissement de l'anode rendue possible par la présence de ponts ;
- une meilleure compacité due à la forme cylindrique aplatie ; et
- la suppression du tube d'alimentation en air.

Toutefois, toutes ces architectures ne répondent que partiellement aux inconvénients principaux, qui sont la mauvaise compacité et les pertes ohmiques élevées dues à la longueur des lignes de courant.

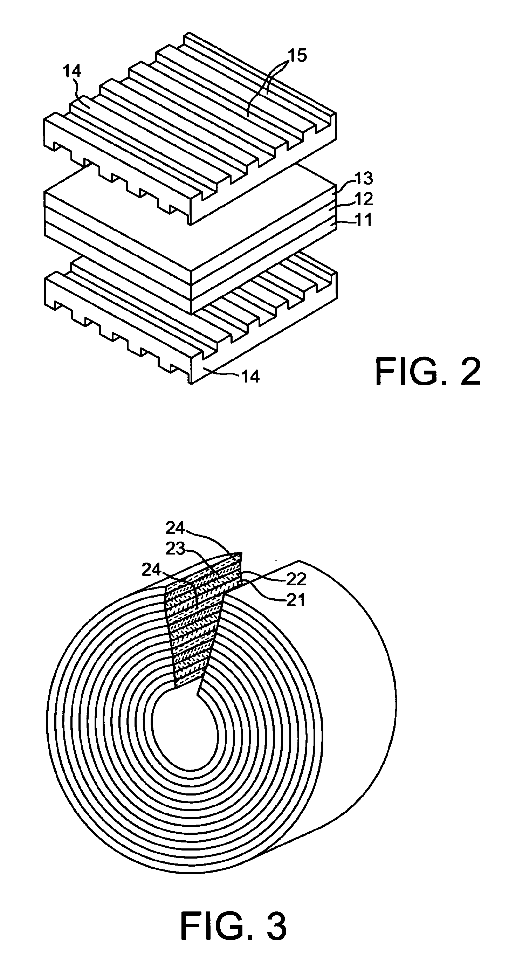

En référence à la figure 2, l'architecture plane est très répandue. L'empilement, donc plan, est constitué de deux plaques bipolaires 14 prenant en sandwich un empilement constitué successivement d'une anode 11, d'un électrolyte 12 et d'une cathode 13. Les plaques bipolaires 14 font office de connecteurs et possèdent également des canaux de circulation 15 orientés, par exemple, perpendiculairement pour organiser une circulation croisée des deux combustibles. L'alimentation et l'évacuation des gaz se fait par des boîtiers disposés sur les quatre faces latérales de l'empilement (non représentés).

Les lignes de courant se trouvent réduites par le fait que le courant n'a qu'à traverser les couches dans leur épaisseur. De plus, la compacité de cette structure lui confère un avantage certain. Par contre, les problèmes d'étanchéité sont plus importants que dans le cas de l'architecture tubulaire et doivent être gérés sur les quatre faces latérales de l'empilement des cellules, afin d'assurer le parcours de chacun des gaz entre les faces d'entrée et de sortie, ainsi que leur séparation. Ceci est dû au fait que les électrodes sont poreuses. De plus, l'étanchéité doit être assurée sur le pourtour des quatre boîtiers.

En résumé, l'architecture plane présente une bonne compacité et des lignes de courant très réduites, mais nécessite beaucoup d'efforts concernant l'étanchéité.

### Résumé de l'invention

Dans le but d'éviter les inconvénients ci-dessus mentionnés relatifs à ces deux types de structures de piles à combustible, un premier objet principal de l'invention est un module de pile à combustible avec des cellules à architecture tubulaire, chaque cellule étant constituée d'un empilement de base concentrique comprenant une cathode, un électrolyte et une anode, ces cellules étant reliées par des interconnecteurs. Ce module est constitué d'un empilement concentrique de plusieurs cellules concentriques et complétées d'un boîtier de distribution de chaque côté.

Selon l'invention, les boîtiers de distribution possèdent des moyens d'alimentation en gaz de deux sortes, à savoir combustible et comburant, et des canaux radiaux débouchant sur une surface côté empilement.

La réalisation principale prévoit que la section du module soit cylindrique.

Cette réalisation se complète avantageusement d'un joint d'étanchéité entre le boîtier et l'empilement, sauf au niveau d'orifices de distribution.

Une particularité du module selon l'invention est que, pour permettre la distribution des combustibles, l'anode et la cathode sont poreuses.

Une réalisation principale du module prévoit d'utiliser une plaque de distribution percée de trous en regard des électrodes à alimenter, de part et d'autre de l'empilement, les interconnecteurs de ce dernier possédant des canaux longitudinaux de distribution en combustible d'entrée et de sortie, décalés et alternés.

Dans le cas où on désire donner une composante hélicoïdale au phénomène, il est avantageux que les interconnecteurs aient une forme hélicoïdale.

Un autre objet principal de l'invention est un procédé de fabrication d'un module tel qu'il vient d'être résumé, dans le but que l'empilement soit monobloc.

Selon l'invention, la fabrication est effectuée par projection par plasma à partir d'un tube central ayant la fonction d'interconnecteur, les différentes phases successives étant les suivantes :
- projection d'une des deux anode et cathode en matière poreuse ;
- projection de l'électrolyte dense ;
- projection de la deuxième parmi l'anode et la cathode ;
- projection d'un interconnecteur, le processus étant renouvelé autant de fois qu'on souhaite empiler de cellules.

Ce procédé se complète avantageusement par le fait que, dans le cas où les interconnecteurs doivent être rainurés pour constituer des canaux longitudinaux de distribution en combustible, ces canaux sont obturés avant la projection de la couche suivante.

Dans le cas de ce procédé d'obtention d'un module, les boîtiers sont prévus en zircone, dans le but de résister à la corrosion.

### Liste des figures

L'invention, ses différentes caractéristiques et réalisations seront mieux comprises à la lecture de la description détaillée suivante, qui est accompagnée de plusieurs figures représentant respectivement :
- figures 1A, 1B et 1C, un premier type de structure de base de piles à combustible selon l'art antérieur ;
- figure 2, un deuxième type de structure de base de piles à combustible selon l'art antérieur ;
- figure 3, en vue cavalière, le principe de la structure de base d'un module de pile à combustible selon l'invention ;
- figure 4, en vue cavalière éclatée, une première réalisation d'un module de pile à combustible selon l'invention ;
- figure 5, en vue cavalière, un boîtier utilisé dans cette première réalisation de l'invention, et
- figure 6, en coupe schématique, une unité de pile à combustible utilisant des modules selon l'invention.

### Description détaillée de plusieurs réalisations de l'invention

En référence à la figure 3, un module élémentaire de pile à combustible selon l'invention est constitué d'un empilement concentrique d'au moins deux cellules élémentaires concentriques reliées par un interconnecteur. Chaque cellule élémentaire est elle-même constituée d'une anode 21, d'un électrolyte 22 et d'une cathode 23. Ainsi, sur cette figure 3, trois cellules élémentaires sont représentées, reliées par deux interconnecteurs, plus deux interconnecteurs 24 supplémentaires à l'intérieur et à l'extérieur du tube ainsi formé.

Plus précisément, le tube central est constitué d'un premier interconnecteur 24 et joue le rôle de collecteur de courant en même temps que de support mécanique. Il constitue le premier pôle de la pile à combustible. Sur ce tube central se trouve une électrode (ici une anode 21), puis l'électrolyte 22 et la seconde électrode (une cathode 23). Un interconnecteur 24 vient assurer le contact avec la cellule élémentaire suivante, aucun intervalle ne subsistant entre deux de ces cellules élémentaires. Chaque cellule élémentaire est donc constituée du même empilement.

A la périphérie de l'ensemble, un interconnecteur 24 supplémentaire sert de collecteur de courant et constitue le second pôle de la pile.

Le diamètre du tube interne constitué par le premier interconnecteur 24 peut être compris entre 5 et 1000 mm. Le nombre de cellules élémentaires ainsi empilées peut être compris entre 2 et 100. Les dimensions externes de l'empilement dépendent du nombre de cellules et de l'épaisseur des couches les constituant. La longueur du tube peut être comprise entre 10 et 1 000 mm. Les cellules élémentaires concentriques n'ont pas toutes la même surface, ce qui entraîne des points de fonctionnement différents d'une cellule à l'autre. Si ceci est nécessaire, on peut prévoir de réduire les surfaces des cellules se trouvant vers la périphérie de l'ensemble, afin de réduire les écarts entre les différentes surfaces successives. Ceci peut se faire en diminuant la hauteur des tubes à mesure que le rayon augmente, ou en masquant une partie de la surface de l'électrode pour qu'elle ne soit plus active.

La géométrie tubulaire cylindrique est choisie comme exemple dans la présente description. Toutefois, on peut imaginer d'autres types de sections tubulaires, non cylindriques, qui entreraient dans le cadre de la présente invention, à savoir des sections carrées, quadrilatérales ou polygonales.

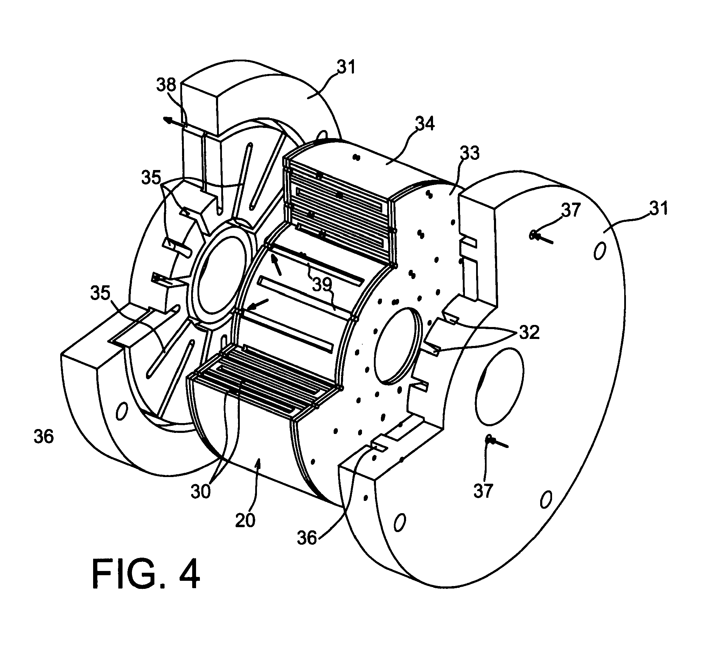

En référence à la figure 4, le module de pile à combustible complet selon l'invention comprend donc principalement une structure 20, telle que décrite précédemment et en référence à la figure 3, placée de manière centrale. Elle est entourée de deux boîtiers de distribution ou de récupération 31 destinés à assurer la circulation des gaz. On voit sur le boîtier de distribution ou de récupération 31 de droite que deux trous 37 sont pratiqués sur sa surface. Ils servent à l'arrivée des gaz, à savoir de l'hydrogène, et de l'oxygène sous la forme d'air. Des canaux circulaires 36 et radiaux 35 permettent d'acheminer ces deux gaz en regard d'une grande série de trous pratiqués sur une plaque de distribution 33 placée de part et d'autre de la structure de base 20. Cette dernière étant composée de nombreuses couches, référencées globalement 30, constituant un empilement de plusieurs cellules de base de pile à combustible de base, les trous des plaques de distribution 33 se trouvent en regard des éléments à alimenter les cathodes et anodes poreuses respectives de ces cellules. Dans le boîtier de distribution ou de récupération 31 de gauche se trouvent les mêmes canaux circulaires 36 et radiaux 35 permettant de collecter les différents gaz résultants de la production de courant électrique. Au moins un trou d'évacuation 38 se trouvant sur ce deuxième boîtier de distribution 31 permet l'évacuation de ces gaz résiduels en dehors du module. Les plaques de distribution 33 font office de joint, car elles servent à assurer l'étanchéité entre le boîtier 31 et la structure 20.

Le fait que cette figure 4 soit écorchée permet de montrer une structure possible des interconnecteurs. En effet, en regard de chaque trou de la plaque de distribution 33, se trouve un canal longitudinal de distribution 39. Dans un même interconnecteur, ces canaux longitudinaux de distribution 39 sont implantés, de façon alternée, aux deux plaques de distribution 33. Ainsi, comme les électrodes sont poreuses, les combustibles gazeux introduits peuvent diffuser à l'intérieur du matériau constituant chacune de ces électrodes, de la manière représentée par les deux flèches inclinées.

Il est également envisagé, dans une autre configuration, qu'un seul orifice d'alimentation de la plaque 33 soit prévu pour chaque électrode, contrairement à ce qui est représenté sur cette figure 4.

Dans le cas représenté sur cette dernière, la circulation des gaz se fait principalement dans la direction axiale, ceci étant facilité par les canaux longitudinaux de distribution 39 pratiqués dans les interconnecteurs. Toutefois, il est possible d'envisager une géométrie hélicoïdale de ces interconnecteurs pour donner une composante légèrement hélicoïdale à la circulation générale des gaz dans les électrodes.

Dans le cas de la figure 4, la circulation de ces gaz se fait de façon parallèle et dans le même sens. Ceci permet d'évacuer les gaz résiduels en même temps au même endroit dans un unique boîtier de récupération 31. Toutefois, il évidemment possible d'envisager une circulation opposée, c'est-à-dire en courant croisé des deux gaz, les gaz résiduels étant récupérés séparément dans chacun des deux boîtiers de distribution 31.

Une telle architecture présente deux avantages principaux qui sont un gain important des pertes ohmiques et une facilité d'étanchéité. En effet, les lignes de courant étant radiales, le courant traverse les couches dans leur épaisseur, de façon identique, à l'architecture plane illustrée à la figure 2. Ceci évite un parcours semi-circonférentiel comme dans l'architecture tubulaire décrite à l'aide des figures 1A, 1B et 1C. Ceci permet donc une réduction importante des pertes ohmiques dans la pile. De plus, les problèmes d'étanchéité sont ramenés sur les deux faces internes des boîtiers de distribution 31, en face des plaques de distribution 33.

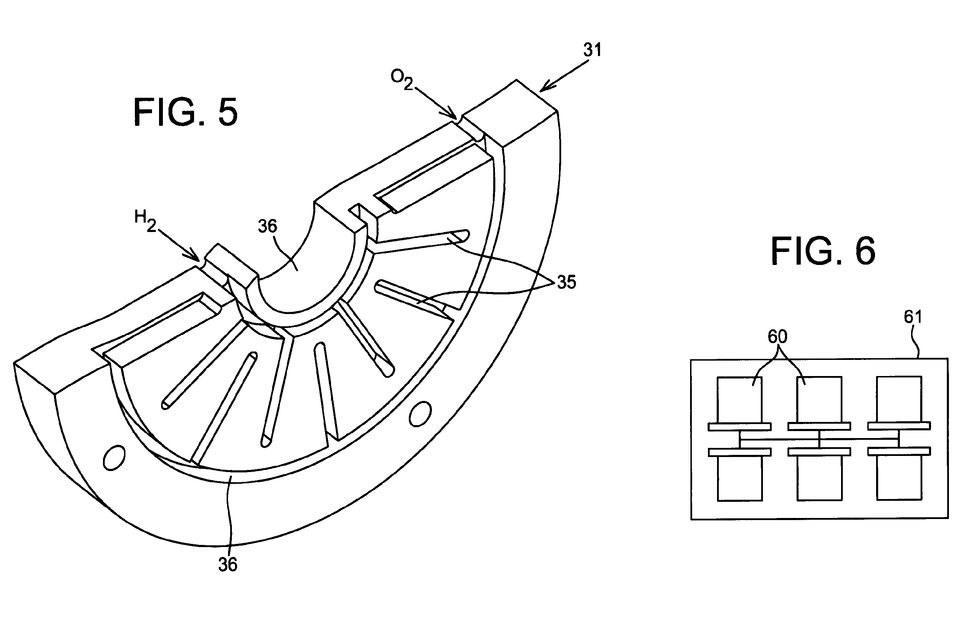

La figure 5 montre de façon un peu plus aisée la face interne des boîtiers de distribution 31. En effet, on retrouve, sur cette figure 5, les canaux radiaux 35, et les canaux circulaires 36 de la figure 4. Un tel boîtier de distribution doit être prévu dans un matériau dont le coefficient de dilatation est proche de ceux des autres constituants de la pile. De plus, il doit résister à la corrosion. Un exemple de réalisation d'un tel boîtier de distribution 31 est d'usiner un bloc de zircone et de le revêtir éventuellement d'un matériau isolant et anti-corrosion.

Il est prévu d'utiliser des matériaux standards pour réaliser les interconnecteurs qui sont métalliques, à savoir un alliage du type à base de nickel. L'anode poreux céramique-métal, dit "cermet" (typiquement : zircone yttriée + nickel). Une zircone yttriée peut être utilisée pour constituer l'électrolyte, tandis que la manganite de lanthane dopée au strontium peut être utilisée pour réaliser la cathode. Ceci n'est qu'un exemple de réalisation, d'autres matériaux pouvant être utilisés.

Le procédé envisagé pour fabriquer l'empilement, tel que représenté à la figure 3 consiste à réaliser les couches successivement pour obtenir un module monobloc.

Ce procédé utilise la projection par plasma. Un tube central en matériau d'interconnecteur sert de support. Il peut être éventuellement rainuré sur sa surface extérieur et pour créer les canaux longitudinaux de distribution, tels que représentés sur la figure 4. Dans ce cas, ces canaux doivent être obturés pour la projection de la couche suivante. Il est alors prévu de projeter successivement différentes couches. La première couche est celle constituant l'anode, ou la cathode, en matériau poreux. L'épaisseur de cette couche est comprise entre 10 et 1 000 µm. Il peut être intéressant de densifier les zones d'extrémités, pour simplifier les étanchéités et l'alimentation en gaz combustible. Ceci peut être réalisé par un ajustement des paramètres de projection.

Ensuite, une couche d'électrolyte en matériau dense est projetée. L'épaisseur de cette couche est comprise entre 10 et 500 µm. Cette couche doit bien évidemment être étanche aux gaz.

Une couche de cathode, ou d'anode, en matériau poreux est alors déposée dans les mêmes conditions que la première électrode.

Enfin, un interconnecteur est déposé toujours par projection. Si celui-ci doit comporter des canaux, par exemple des canaux longitudinaux de distribution, on dépose des masques sur la couche précédente. On obtient ainsi des canaux du côté interne de l'interconnecteur. La projection se poursuit jusqu'à obtenir une couche continue et dense d'épaisseur suffisante. On redépose à nouveau des masques pour réaliser les canaux côté externe de l'interconnecteur.

Ces quatre opérations sont reprises un certain nombre de fois jusqu'à atteindre le nombre de couches souhaité.

L'empilement ainsi obtenu est monobloc, ce qui permet d'assurer une tenue mécanique de toutes les cellules élémentaires, quelles que soient leurs épaisseurs.

En référence à la figure 6, plusieurs modules élémentaires 60 de piles à combustible sont assemblés dans une chambre 61 isolée thermiquement, afin de conserver ces modules à la température de fonctionnement. Cette chambre 61 devra comprendre des traversées pour le passage des gaz, à la fois pour l'entrée et la sortie, les gaz résiduels étant évacués seuls ou de façon mélangée.

Il est prévu que les gaz soient amenés à l'intérieur des modules par des tuyaux d'une longueur suffisante pour que ces gaz soient préchauffés avant leur utilisation. Les gaz résiduels sortant des modules peuvent être mélangés et être brûlés à l'intérieur de la chambre 61 ou être amenés par des tuyaux à l'extérieur de celle-ci. Dans un exemple, les gaz résiduels sont récupérés séparément en sortie, tandis que les tuyaux d'amenée des gaz entrant traversent le coeur de la pile pour que les gaz y soient préchauffés.

Les connexions électriques sont assurées entre les modules, sachant que la face interne d'un module est l'un des pôles de la pile, la face externe étant le second.

La température de fonctionnement d'un tel ensemble peut être de 750°C. Il est ainsi possible d'obtenir une pile complète, constituée d'un assemblage de plusieurs modules, afin d'obtenir un voltage et une puissance désirée. Le tout confiné dans un volume avec des pertes fortement réduites par rapport aux solutions existantes.

## Revendications

1. Module de pile à combustible composé de cellules à architecture tubulaire reliées par des interconnecteurs (24, 34, 44), chaque cellule étant constituée d'un empilement de base concentrique comprenant, une anode (21), un électrolyte (22) et une cathode (23),
**caractérisé en ce qu'**il est constitué d'un empilement concentrique de plusieurs cellules concentriques séparées par les interconnecteurs et complétées de chaque côté d'un boîtier de distribution possédant des moyens d'alimentation en gaz de deux sortes comprenant des canaux radiaux (35) débouchant sur chaque surface côté empilement (31).

2. Module selon la revendication 1, **caractérisé en ce que** la section de chaque module est cylindrique.

3. Module selon la revendication 1, **caractérisé en ce qu'**elle comprend un joint d'étanchéité entre chaque boîtier (31) et l'empilement, sauf au niveau d'orifices de distribution.

4. Module selon la revendication 1, **caractérisé en ce que** l'anode (21) et la cathode (23) sont poreuses.

5. Module selon la revendication 1, **caractérisé en ce qu'**il comprend une plaque de distribution (33) percée de trous en regard des électrodes à alimenter, de part et d'autre de l'empilement, les interconnecteurs (34) de ce dernier possédant des canaux longitudinaux de distribution (39) en gaz d'entrée et sortie, de façon décalée et alternée.

6. Module selon la revendication 1, **caractérisé en ce que** les interconnecteurs ont une forme hélicoïdale.

7. Module selon la revendication 1, **caractérisé en ce que** les boîtiers (31) sont en zircone.

8. Procédé de fabrication d'un module selon l'une des revendications 1 à 6, ce module étant monobloc, **caractérisé en ce que** la fabrication est effectuée par projection par plasma à partir d'un tube central ayant la fonction d'interconnecteurs, de différentes phases successives étant les suivantes :
- projection sur un interconnecteur (24, 34, 44) d'une des deux anode (21) et cathode (23) en matière poreuse ;
- projection de l'électrolyte (22) dense ;
- projection de la deuxième parmi l'anode (21) et la cathode (23) ; et
- projection d'un interconnecteur (24),
le processus étant renouvelé autant de fois qu'on souhaite empiler de cellules.

9. Procédé selon la revendication 8, **caractérisé en ce que** le ou les interconnecteurs (39) devant être rainurés pour pouvoir constituer des canaux longitudinaux de distribution (39) en combustible, ces canaux sont obturés avant la projection de la couche suivante.

10. Unité de pile à combustible constituée de plusieurs modules (60) selon l'une quelconque des revendications 1 à 7, confinés dans une enceinte (61) thermiquement isolée et possédant au moins un passage d'entrée et de sortie des gaz combustibles.

## Claims

1. A fuel cell module consisting of cells with a tubular architecture connected through interconnnectors (24, 34, 44), each cell consisting of a concentric base stack comprising an anode (21), an electrolyte (22) and a cathode (23),
**characterized in that** it consists of a concentric stack of several concentric cells separated by the interconnectors and completed on each side with a distribution case having gas supplying means of two kinds comprising radial channels (35) opening out on each surface on the stack side (31).

2. The module according to claim 1, **characterized in that** the section of each module is cylindrical.

3. The module according to claim 1, **characterized in that** it comprises a seal gasket between each case (31) and the stack, except at the distribution ports.

4. The module according to claim 1, **characterized in that** the anode (21) and the cathode (23) are porous.

5. The module according to claim 1, **characterized in that** it comprises a distribution plate (33) pierced with holes facing the electrodes to be supplied, on either side of the stack, the interconnectors (34) of the latter having longitudinal, shifted and alternating, inlet and outlet gas distribution channels (39) .

6. The module according to claim 1, **characterized in that** the interconnetors have a helicoidal shape.

7. The module according to claim 1, **characterized in that** the cases (31) are in zirconia.

8. A method for making a module according to any of claims 1 to 6, this module being a single piece, **characterized in that** the making is carried out by plasma projection from a central tube having the function of interconnectors, the different successive phases being the following:
- projecting on an interconnector (24, 34, 44) either one of the anode (21) and cathode (23) in porous material;
- projecting the dense electrolyte (22) ;
- projecting the second one of the anode (21) and cathode (23); and
- projecting an interconnector (24),
the process being renewed as many times as desired for stacking the cells.

9. The method according to claim 8, **characterized in that** as the interconnector(s) (39) should be grooved in order to be able to form longitudinal fuel distribution channels (39), these channels are blocked before projecting the next layer.

10. A fuel cell unit consisting of several modules (60) according to any of claims 1 to 7, confined in a thermally insulated chamber (61) and having at least an inlet and outlet passage for combustible gases.

## Patentansprüche

1. Brennstoffzellenmodul, gebildet durch Zellen von röhrenförmiger Bauart, zusammengehalten durch Zwischenverbinder (24, 34, 44), wobei jede Zelle durch einen Stapel mit konzentrischer Basis gebildet wird, umfassend eine Anode (21), ein Elektrolyt (22) und eine Katode (23),
**dadurch gekennzeichnet, dass** er gebildet wird durch einen konzentrischen Stapel aus mehreren konzentrischen Zellen, getrennt durch die Zwischenverbinder und auf jeder Seite vervollständigt durch ein Verteilungsgehäuse (31) mit Einspeisungseinrichtungen für zwei Sorten von Gasen, radiale Kanäle (35) umfassend, die an jeder stapelseitigen Oberfläche münden.

2. Modul nach Anspruch 1, **dadurch gekennzeichnet**, das der Querschnitt jedes Moduls zylindrisch ist.

3. Modul nach Anspruch 1, **dadurch gekennzeichnet**, das er zwischen jedem Gehäuse (31) und dem Stapel, aber nicht in Höhe der Verteilungslöcher, eine Dichtung umfasst.

4. Modul nach Anspruch 1, **dadurch gekennzeichnet**, das die Anode (21) und die Katode (23) porös sind.

5. Modul nach Anspruch 1, **dadurch gekennzeichnet**, das er beiderseits des Stapels eine Verteilungsplatte (33) umfasst, die den zu versorgenden Elektroden gegenüberstehende Löcher aufweist, wobei die Zwischenverbinder (34) des Stapels versetzte und alternierende longitudinale Gasversorgungs-Ein- und Austrittskanäle (39) besitzen.

6. Modul nach Anspruch 1, **dadurch gekennzeichnet**, das die Zwischenverbinder spiralförmig sind.

7. Modul nach Anspruch 1, **dadurch gekennzeichnet**, das die Gehäuse (31) aus Zirkon sind.

8. Verfahren zur Herstellung eines Moduls nach einem der Ansprüche 1 bis 6,
wobei dieser Modul ein Einblockmodul ist,
**dadurch gekennzeichnet, dass** die Herstellung, ausgehend von einem als Zwischenverbinder dienenden zentralen Rohr, durch Plasmaspritzen erfolgt, mit den folgenden sukzessiven Phasen:
- Spritzen von einer der beiden Elektroden, der Anode (21) oder der Katode (23), aus porösem Material auf einen Zwischenverbinder (24, 34, 44);
- Spritzen des dichten Elektrolyts (22);
- Spritzen der zweiten der beiden Elektroden, der Anode (21) oder der Katode (23); und
- Spritzen eines Zwischenverbinders (24),
wobei dieser Prozess so viele Male wiederholt wird, wie man Zellen stapeln will.

9. Verfahren nach Anspruch 8, **dadurch gekennzeichnet, dass** der oder die Zwischenverbinder genutet sein müssen, so dass sie longitudinale Brennstoffversorgungskanäle (39) aufweisen, wobei diese Kanäle vor dem Spritzen der nächsten Schicht verschlossen werden.

10. Brennstoffzelleneinheit, gebildet durch mehrere Module (60) nach einem der Ansprüche 1 bis 7, eingeschlossen in einen Behälter (61), der thermisch isoliert ist und wenigstens einen Brenngas-Ein- und Auslass aufweist.
